# EUROPÄISCHE PATENTSCHRIFT

(11) **EP 2 037 239 B1**
(45) Veröffentlichungstag und Bekanntmachung des Hinweises auf die Patenterteilung: **17.11.2010**
(21) Anmeldenummer: 08164158.1
(22) Anmeldetag: 11.09.2008
(51) Int. Cl.: G01J 1/42, G01J 1/02, B60H 1/00, G01K 1/20

(54) **Sensoreinheit für den Einbau in Fahrzeugen**
Sensor unit for use in vehicles
Unité de capteur pour l'intégration dans des véhicules

(30) Priorität: 12.09.2007 DE 102007043349
(43) Veröffentlichungstag der Anmeldung: 18.03.2009
(73) Patentinhaber: Behr-Hella Thermocontrol GmbH, 70190 Stuttgart (DE)
(72) Erfinder: Knittel, Otto, 59494 Soest (DE); Stich, Dr. Bernd, 33142, Büren (DE)
(74) Vertreter: von Kreisler Selting Werner

(56) Entgegenhaltungen:
- EP-A- 1 457 365
- DE-A1-102005 005 411
- DE-B3- 10 300 223
- DE-B3- 10 312 077

## Beschreibung

Die Erfindung betrifft eine Sensoreinheit für den Einbau in Fahrzeugen und insbesondere in oder an der Instrumententafel oder einer Bedieneinheit eines Fahrzeuges wie beispielsweise einer Klimaanlage.

Die technischen Eigenschaften und der Bedienkomfort von Bedieneinheiten eines Fahrzeuges und hier insbesondere von Klimaanlagen werden stets verbessert. So ist es beispielsweise bekannt, auf einem Display oder dergleichen Anzeigevorrichtung fahrzeuginsassenabhängige Parameter und Einstellungsmöglichkeiten erst dann anzuzeigen, wenn sich der betreffende Insasse beispielsweise mit seiner Hand der Bedieneinheit nähert. Beispiele derartiger Systeme sind in DE-A-195 29 571 und DE-A-10 2004 045 885 beschrieben.

Näherungssensoren, die beruhrungslos und optoelektronisch arbeiten, sind beispielsweise aus DE-A-100 01 943 , DE-A-102 56 429 und DE-B-103 00 223 bekannt.

Eine Bedieneinheit mit Bedienelementen zur manuellen Bedienung einer Fahrzeugfunktion und mit einem Näherungssensor ist aus DE-A-10 2005 005411 bekannt.

Ferner existieren im Stand der Technik Sensoren zur Erfassung der Temperatur in einem Bereich des Fahrzeuginnenraums. Die Besonderheit dieser Sensoren, die beispielsweise in EP-A-1457365, DE-B-103 12 077 und DE-U-20 2004 002 427 beschreiben sind, besteht darin, dass der Sensor zur Erfassung der Lufttemperatur nicht mehr einem durch einen Belüftungsmotor erzeugten Luftstrom ausgesetzt ist. Diese Sensoren sind vielmehr "unbeluftet", wobei der Einfluss der Erwärmung im Bereich des Sensors durch beispielsweise Sonneneinstrahlung und parasitärer Temperaturkonvektion kompensiert wird.

Beide Sensorkonzepte (Temperaturerfassung und Annäherung) erfordern voneinander getrennte Baueinheiten, was der Unterbringung der Sensoren in einem Fahrzeug Grenzen setzt.

Aufgabe der Erfindung ist es, eine Sensoreinheit für den Einbau in Fahrzeugen, insbesondere in oder an der Instrumententafel oder einer Bedieneinheit eines Fahrzeuges wie beispielsweise derjenigen für eine Klimaanlage, zu schaffen, die einen einzigen Sensor, d. h. eine einzige Baueinheit für die Erfassung der Temperatur und die Erfassung der Annäherung eines Objekts aufweist.

Zur Lösung dieser Aufgabe wird mit der Erfindung eine Sensoreinheit für den Einbau in Fahrzeugen, insbesondere in oder an der Instrumententafel oder einer Bedieneinheit eines Fahrzeuges wie beispielsweise einer Klimaanlage, vorgeschlagen, wobei die Sensoreinheit versehen ist mit den Merkmalen des Anspruchs 1.

Bei der erfindungsgemäßen Sensoreinheit nutzt man zu unterschiedlichen Zeitpunkten das Empfangssignal eines optischen fotosensitiven Sensorelements (nachfolgend der Einfachheit halber mit Fotodiode bezeichnet) zu unterschiedlichen Zwecken, nämlich zum einen für die Kompensation des von der Sonneneinstrahlung verursachten Wärmeeinflusses und zum anderen für die Objektannäherungserfassung.

In einer Kunststoff-Vergussmasse (Gehäuse) sind bei der erfindungsgemäßen Sensoreinheit mindestens ein Messleuchtelement (nachfolgend aus Vereinfachungsgründen mit Messleuchtdiode bezeichnet), ein Temperatursensor und eine Fotodiode angeordnet. Der Temperatursensor weist aufgrund seiner Anordnung innerhalb des Gehäuses eine gute thermische Ankopplung an den Bereich um das Gehäuse auf. Da das Gehäuse zumindest teilweise dem Innenraum des Fahrzeuges ausgesetzt ist, kann also auf diese Art und Weise die Lufttemperatur im unmittelbaren Bereich um das Gehäuse ermittelt werden. Diese Temperatur ist unter anderem beeinflusst durch erwärmte Komponenten innerhalb des Bereichs des Gehäuses (beispielsweise Frontblende der Bedieneinheit), was durch Erfassung der Sonneneinstrahlung (hier insbesondere des IR-Anteils der Sonneneinstrahlung) über die Fotodiode kompensiert werden kann. Temperaturbeeinflussungen, die von Komponenten verursacht werden, die sich innerhalb der Instrumententafel befinden (beispielsweise Steuergeräte oder dergleichen), können durch optionale Kompensationstemperatursensoren kompensiert werden.

Die Messleuchtdiode (ggf. können auch mehrere Messleuchtdioden vorhanden sein) sendet während Einschaltintervallen elektromagnetische Messstrahlung in den Innenraum des Fahrzeuges aus. Nähert sich nun ein Objekt dem Sensor (Gehäuse) an, so wird die vom Gehäuse ausgesendete Messstrahlung reflektiert und diese reflektierte Messstrahlung von der Fotodiode erfasst. Hierdurch ist es möglich, die Annäherung beispielsweise einer Hand eines Fahrgastes zum Gehäuse zu erkennen.

Erfindungsgemäß wird nun über die Ansteuer- und Auswerteeinheit die Messleuchtdiode (bzw. Messleuchtdioden) nur innerhalb von Einschaltintervallen, also intermittierend, angesteuert. In den Ausschaltintervallen kann die Fotodiode dann genutzt werden, um anhand empfangener Sonnenstrahlung parasitäre Einflüsse auf das Messsignal des im Gehäuse angeordneten Temperatursensors zu kompensieren. Somit ist es möglich, mit einem einzigen Sensor, der ein einziges Gehäuse mit den oben genannten drei Sensoren bzw. Dioden aufweist, sowohl für die (unbelüftete) Innenraumtemperaturerfassung als auch für die Detektion der Annäherung eines Objekts an die Einheit, in der der Sensor angeordnet ist, zu nutzen.

Bei dem mindestens einen Messleuchtelement handelt es sich zweckmäßigerweise um eine LED; auch das optische fotosensitive Sensorelement kann als Diode ausgebildet sein, die für die Strahlung der Messleuchtdiode sensitiv ist. Der Temperatursensor ist vorzugsweise als NTC-Sensor ausgebildet. Bei der Kunststoff-Vergussmasse, in die die Dioden und der Sensor sowie die aus dem Gehäuse herausragenden elektrisch leitenden Anschlusselemente eingebettet sind, handelt es sich dann um ein für die relevante Strahlung durchlässiges Material. Bei dieser Strahlung kann es sich um Strahlung im sichtbaren oder IR-Bereich handeln; die Mess- und Referenzleuchtdioden sowie die Fotodiode können Strahlung im sichtbaren Bereich (oder IR-Bereich) aussenden bzw. empfangen.

In vorteilhafter Weiterbildung der Erfindung ist vorgesehen, dass in der Vergussmasse des Gehäuses ferner eine mit den Anschlusselementen verbundene Referenzleuchtdiode eingebettet ist, die von der Fotodiode empfangbare elektromagnetische Referenzstrahlung aussendet und die von der Ansteuer- und Auswerteeinheit innerhalb der Einschaltintervalle der Messleuchtdiode zum Aussenden der elektromagnetischen Referenzstrahlung aktivierbar ist, wobei anhand des Unterschiedes der Intensitäten der durch die Fotodiode empfangenen Referenzstrahlung der Referenzleuchtdiode und der von einem sich annähernden Objekt wie beispielsweise einer Hand eines Fahrgastes reflektierenden Messstrahlung der Messleuchtdiode die Änderung eines Objekts und/oder der Abstand eines Objekts zum Gehäuse ermittelbar ist. Die Referenzleuchtdiode verbessert die Erfassung von sich der Sensoreinheit nähernden Objekten. Die prinzipielle Funktionsweise und das Zusammenspiel der Referenzstrahlung mit der Messstrahlung ist beispielsweise in den oben im Zusammenhang mit den bekannten optoelektronischen Annäherungssensoren erwähnten Druckschriften beschrieben.

Wie bereits oben erwähnt, lässt sich die erfindungsgemäße Sensoreinheit beispielsweise dazu nutzen, um anhand der Detektion eines sich annähernden Objekts (beispielsweise Hand eines Fahrgastes) ein Display anzusteuern. Werden nun zwei Sensoren verwendet, die voneinander beabstandet in einer Bedieneinheit angeordnet sind, so lassen sich die Richtungen unterscheiden, aus denen sich Objekte annähern, wodurch es beispielsweise möglich ist, die Annäherung einer Hand des Fahrers gegenüber der Annäherung einer Hand des Beifahrers zu unterscheiden. Hierdurch ergeben sich weitere Möglichkeiten wie beispielsweise das Vorsehen lediglich eines einzigen Bedienelements zur Vorgabe der Temperatur auf der Fahrerseite und auf der Beifahrerseite, was den Hardwareaufwand der Bedieneinheit reduziert. Daneben kann diese Unterscheidung auch dazu benutzt werden, auf dem Display fahrer- bzw. beifahrerspezifische Anzeigen zu generieren, wenn sich von der Fahrerseite bzw. von der Beifahrerseite eine Hand nähert.

Schließlich können die beiden Sensoren auch zur Ermittlung der Intensität und des Einfallswinkels der Sonnenstrahlung genutzt werden. Hierzu ist gemäß einer vorteilhaften Weiterbildung der Erfindung vorgesehen, die beiden Sensoren derart anzuordnen, dass ihre durch die Ausrichtung der Fotodioden definierten optischen Achsen einen spitzen Winkel bilden, wobei dann in der Ansteuerund Auswerteeinheit anhand der Intensitäten der von den Fotodioden der beiden Sensoren empfangenen Sonnenstrahlung der Einfallswinkel der Sonnenstrahlung und deren Intensität ermittelbar ist.

Bei dieser Weiterbildung der Erfindung braucht dann einer der beiden Sensoren keinen Temperatursensor aufzuweisen. Es ist aber auch ebenfalls möglich, durch beide Sensoren auch die Temperatur im Bereich um die Sensoren herum zu ermitteln, was für die Genauigkeit der Temperaturerfassung im Innenraum vorteilhaft sein kann.

Die Erfindung wird nachfolgend anhand diverser Ausführungsbeispiele und unter Bezugnahme auf die Zeichnung näher erläutert. Im Einzelnen zeigen dabei:
Fig. 1 eine perspektivische Ansicht eines aus Kunststoff-Vergussmasse bestehenden Gehäuses mit insgesamt fünf Anschlussbeinchen und mehreren Sensoren und LEDs, die in dem Gehäuse eingebettet sind,
Fig. 2 eine Draufsicht auf das Gehäuse gemäß Fig. 1,
Fig. 3 ein Blockschaltbild der Auswerte- und Ansteuereinheit für den Sensor gemäß Fign. 1 und 2,
Fig. 4 eine schematische Darstellung der Anordnung zweier Sensoren zur Fahrer-/Beifahrer-Erkennung einer sich annähernden Hand und
Fig. 5 eine schematische Darstellung der Anordnung zweier Sensoren an beispielsweise einem Klimasteuergerät zur Erfassung der Intensität und des Einfallswinkels der Sonnenstrahlung.

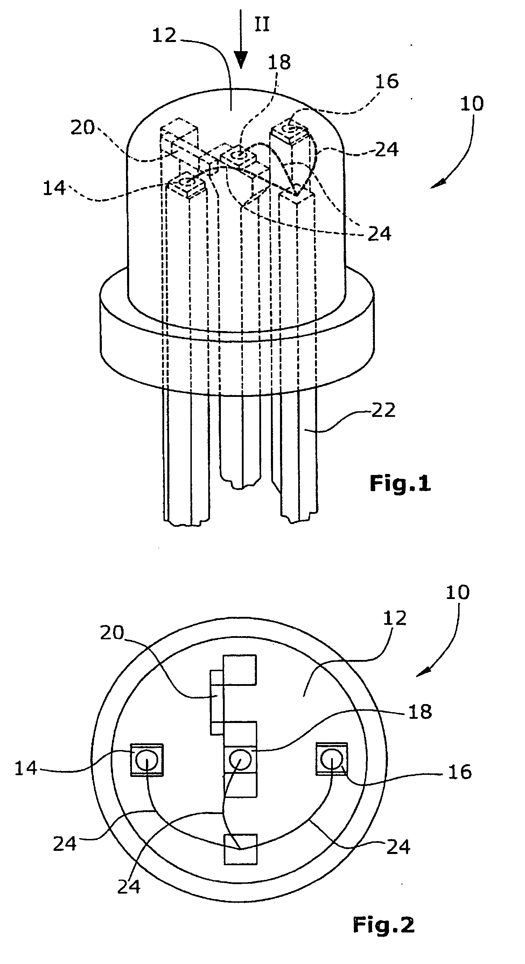

In den Fign. 1 und 2 ist der grundsätzliche konstruktive Aufbau eines Ausführungsbeispiels eines erfindungsgemäßen kombinierten Temperatur- und Annäherungssensors 10 gezeigt. Der Sensor 10 weist ein für Infrarotstrahlung transparentes Gehäuse 12 aus einer Kunststoff-Vergussmasse auf, wie es von handelsüblichen Foto- bzw. Leuchtdioden bekannt ist. In dem Gehäuse 12 sind in diesem Ausführungsbeispiel der Erfindung eine Messleuchtdiode 14, eine Referenzleuchtdiode 16, eine Fotodiode 18 und ein als NTC-Bauelement ausgebildeter Temperatursensor 20 untergebracht. In den Fign. 1 und 2 sind auch die in diesem Ausführungsbeispiel fünf Anschlussbeinchen 22 gezeigt. Ferner sind in den Fign. 1 und 2 die Bonddrähte 24 für die elektrische Verbindung der Dioden zu erkennen.

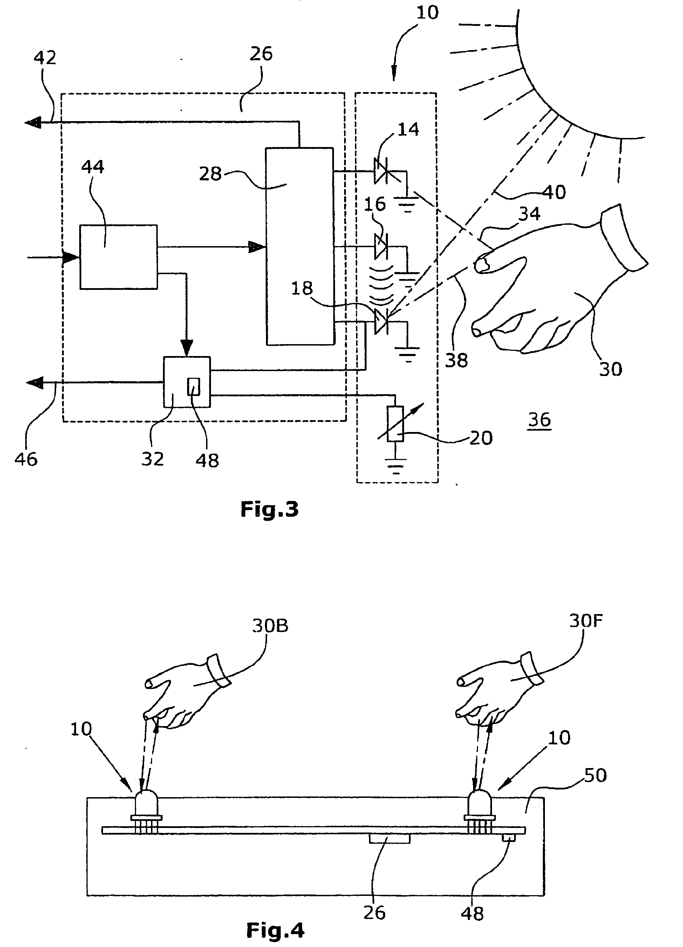

Fig. 3 zeigt ein Blockschaltbild einer Ansteuer- und Auswerteeinheit 26, die der Ansteuerung des Sensors 10 und der Auswertung der vom Sensor 10 gelieferten Messsignale dient. Die Ansteuer- und Auswerteeinheit 26 umfasst eine Signalverarbeitungseinheit 28 für die Detektion der Annäherung eines Objekts (Hand) 30 an den Sensor 10 und weist eine weitere Signalverarbeitungseinheit 32 auf, die der Ermittlung der Temperatur dient. Hierbei sei angenommen, dass der Sensor 10 in einem Klimasteuergerät derart angeordnet ist, dass die Messleuchtdiode 14 ihre Strahlung 34 in den mit 36 gekennzeichneten Innenraum eines Fahrzeuges abstrahlt und die Fotodiode 18 die Reflektionsstrahlung 38, die durch Reflektion der Messstrahlung 34 an einem Objekt wie z. B. einer Hand 30, welche sich im Bereich des Sensors 10 befindet, reflektiert wird, empfängt. Darüber hinaus empfängt die Fotodiode 18 auch Sonnenstrahlung 40. Der Temperatursensor 20 erfasst die Lufttemperatur im Innenraum 36 im Bereich um den Sensor 10 herum. Schließlich wird von der Referenzleuchtdiode 16 ausgesendete Referenzstrahlung direkt oder als Streustrahlung von der Fotodiode 18 erfasst.

Die Annäherungsdetektion der Hand 30 erfolgt in diesem Ausführungsbeispiel so, wie es für den unter HALIOS^{®} vertriebenen Sensor der Mechaless Optoelectronic Systems vorgesehen ist. Die Ansteuerung eines derartigen Sensors weist einen Regelkreis auf, der die Messleuchtdiode 14, die Referenzleuchtdiode 16, die Fotodiode 18 und einen Verstärker, einen Synchrondemodulator und einen PI-Regler (sämtlich in Fig. 3 nicht dargestellt) aufweist. Die Messleuchtdiode 14 sendet rechteckförmig amplitudenmodulierte Strahlung aus. Über eine Reflektion an der Hand 30 gelangt ein Teil dieser Strahlung zur Fotodiode 18. Die Referenzleuchtdiode 16 sendet ebenfalls rechteckförmig amplitudenmodulierte Strahlung aus, die entweder direkt oder indirekt (als Streulicht) von der Fotodiode 18 empfangen wird. Dabei ist die amplitudenmodulierte Strahlung der Referenzleuchtdiode 16 um 180° phasenversetzt zur Strahlung der Messleuchtdiode 14. Die Fotodiode 18 gibt ein Signal aus, bei dem es sich um eine Überlagerung der reflektierten Strahlung 38 und der Strahlung der Referenzleuchtdiode 16 handelt. Die Wechselanteile beider Signale heben sich zu einem Gleichsignal auf, wenn die Amplituden der modulierten Strahlungen gleich sind. Über den Synchrondemodulator kann nun detektiert werden, welche der beiden Leuchtdioden (Messleuchtdiode 14 oder Referenzleuchtdiode 16) zu stark sendet. Diese Information wird dem Regler zugeführt, weicher die Amplitude der Strahlung der Referenzleuchtdiode 16 so anpasst, dass das Ausgangssignal der Fotodiode 18 ein Gleichsignal ist (Regelbedingung).

Ändert sich nun die Position der Hand 30, wird hierdurch eine Änderung des Lichtanteils, welcher von der Messleuchtdiode 14 zur Fotodiode 18 gelangt, hervorgerufen. Dies bewirkt unmittelbar ein Nachführen der Intensität der Referenzleuchtdiode 16 durch den Regler, um die Regelbedingung zu erfüllen. Dieses Nachstellen verursacht eine Änderung im Regelsignal, das gleichzeitig auch als Ausgangssignal 42 dient und damit die Annäherung und/oder die Entfernung der Hand 30 wiedergibt. Damit stellt das Ausgangssignal 42 ein Maß für die Reflektion der Messstrahlung 34 an der Hand 30 dar. Das Ausgangssignal 42 ist damit direkt proportional zur optischen Kopplung zwischen der Hand 30 und der Fotodiode 18 und somit ein Maß für den Abstand der Hand 30 vom Sensor 10.

Durch eine Steuereinheit 44 der Ansteuer- und Auswerteeinheit 26 werden nun die Signalverarbeitungseinheit 28 für die Annäherungsdetektion und die Signalverarbeitungseinheit 32 für die Temperaturermittlung alternierend angesteuert. Damit werden die Messleuchtdiode 14 und die Referenzleuchtdiode 16 nur innerhalb von Einschaltintervallen aktiviert, während sie für die Dauer von zwischen jeweils zwei aufeinanderfolgenden Einschaltintervallen liegenden Ausschaltintervallen deaktiviert sind. Während der Ausschaltintervalle gibt das Signal der Fotodiode 18 dann die Intensität der Sonnenstrahlung 40 an. Da der Temperatursensor 20 ununterbrochen ein die Temperatur im Innenraum 36 repräsentierendes Signal ausgibt, kann während der Ausschaltintervalle der Messleuchtdiode 14 und der Referenzleuchtdiode 16 von der Signalverarbeitungseinheit 32 ein Ausgangssignal 46 erzeugt werden, das eine Information über die Innenraumtemperatur enthält. Dabei wird das Signal des Temperatursensors 20 durch Erwärmungen von Komponenten um den Sensor 10 herum in Folge der Sonneneinstrahlung 40 und durch andere thermische Effekte beeinflusst. Die Erwärmung infolge der Sonnenstrahlung 40 wird durch das Signal des Fotosensors 18 kompensiert, während die anderen thermischen Beeinflussungen (z. B. Konvektion) durch einen Kompensationstemperatursensor 48 kompensiert werden.

Während der Aktivierung der Signalverarbeitungseinheit 28 empfängt die Fotodiode 18 auch Sonnenstrahlung 40. Diese wirkt sich aber auf die Annäherungsdetektion nicht aus, da sie sich innerhalb der kurzen Zeiträume, für die die Annäherungsdetektion aktiviert ist, wie ein Gleichsignal verhält.

Wie anhand der Fig. 3 erläutert, lässt sich also der Sensor 10 gemäß Fign. 1 und 2 sowohl für die Annäherungsdetektion als auch für die Temperaturerfassung nutzen, und zwar während unterschiedlicher intermittierend aufeinanderfolgender Zeiträume.

In Fig. 4 ist schematisch dargestellt, wie unter Verwendung zweier Sensoren 10 in einem Klimasteuergerät 50 eine Fahrer-Beifahrer-Erkennung bei der Bedienung des Klimasteuergeräts 50 vorgenommen werden kann. So spricht bei Annäherung der Hand 30F des Fahrers der in Fig. 4 rechts dargestellte Sensor 10 an, während bei einer Annäherung durch die Hand 30B des Beifahrers der in Fig. 4 links gezeigte Sensor 10 anspricht. Für die erfindungsgemäße Integration der Temperaturerfassung und der Erfassung von sich annähernden Objekten in einem einzigen Sensor ist in dem Ausfuhrungsbeispiel gemäß Fig. 4 nicht zwingend erforderlich, dass beide Sensoren 10 auch über einen Temperatursensor verfügen. Es reicht vielmehr aus, wenn lediglich einer der beiden Sensoren 10 einen Temperatursensor aufweist.

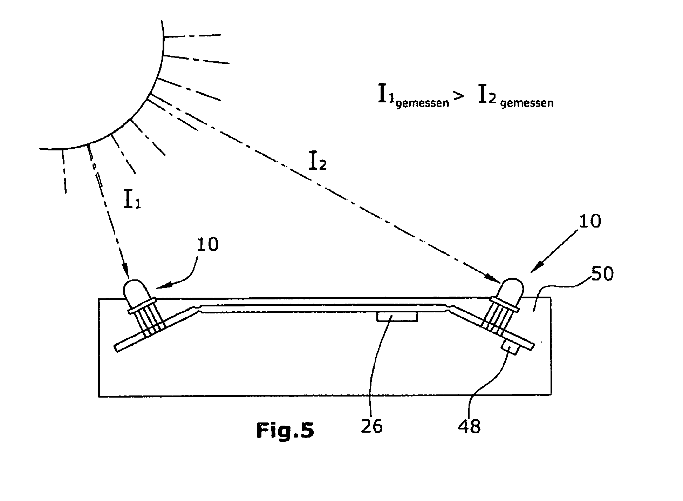

Fig. 5 zeigt die Situation, in der durch Schrägstellung der beiden Sensoren 10, die wiederum an beispielsweise einem Klimasteuergerät 50 angeordnet sind, sich eine Information über den Einfallswinkel der Sonnenstrahlung gewinnen lässt. Die Links-Rechts- bzw. Fahrer-Beifahrer-Erkennung, wie sie anhand von Fig. 4 erläutert ist, kann bei der Anordnung der Sensoren 10 gemäß Fig. 5 ebenfalls realisiert werden. In Fig. 5 empfangen die Fotodioden der beiden Sensoren 10 aufgrund von deren winkliger Ausrichtung ihrer optischen Achsen 52 zueinander unterschiedlich starke Strahlungsintensitäten, woraus auf den aktuellen Sonnenstand (Einfallswinkel der Sonnenstrahlung) geschlossen werden kann. In Fig. 5 ist ein Ausführungsbeispiel gezeigt, bei dem die beiden Sensoren 10 schrägstehend und voneinander wegweisend angeordnet sind. Es ist ebenso möglich, die beiden Sensoren 10 derart winklig zueinander anzuordnen, dass sie gegeneinander gekippt bzw. geneigt angeordnet sind.

### BEZUGSZEICHENLISTE

- 10: Annäherungssensor, Sensor
- 12: Gehäuse
- 14: Messleuchtdiode
- 16: Referenzleuchtdiode
- 18: Fotodiode
- 20: Temperatursensor
- 22: Anschlussbeinchen
- 24: Bonddrähte
- 26: Auswerteeinheit
- 28: Signalverarbeitungseinheit
- 30: Hand
- 30B: Hand (von Beifahrerseite)
- 30F: Hand (von Fahrerseite)
- 32: Signalverarbeitungseinheit
- 34: Messstrahlung
- 36: Fahrzeuginnenraum
- 38: Reflektionsstrahlung
- 40: Sonnenstrahlung
- 42: Ausgangssignal
- 44: Steuereinheit
- 46: Ausgangssignal
- 48: Kompensationstemperatursensor
- 50: Klimasteuergerät
- 52: optische Achsen der Sensoren

## Patentansprüche

1. Sensoreinheit für den Einbau in Fahrzeugen, insbesondere in oder an der Instrumententafel oder einer Bedieneinheit eines Fahrzeuges wie beispielsweise einer Klimaanlage, mit
- mindestens einem Sensor (10) zur Erfassung der Temperatur in einem Bereich des Fahrzeuginnenraums (36), wobei der Sensor (10) versehen ist mit
- einem eine Kunststoff-Vergussmasse aufweisenden Gehäuse (12), aus dem mehrere elektrisch leitende Anschlusselemente (22) herausragen,
- einem optischen, fotosensitiven Sensorelement (18) und
- einem Temperatursensor (20) zur Ermittlung der Temperatur in der Umgebung des Gehäuses (12),
- wobei das optische, fotosensitive Sensorelement (18) und der Temperatursensor (20) in der Vergussmasse des Gehäuses (12) eingebettet und innerhalb des Gehäuses (12) mit den Anschlusselementen (22) verbunden sind, und
- einer mit den Anschlusselementen (22) des Gehäuses (12) verbindbaren Ansteuer- und Auswerteeinheit (26),
**dadurch gekennzeichnet,**
- **dass** der Sensor (10)zur Erfassung der Annäherung eines Objekts, beispielsweise der Hand (30,30F,30B) eines Fahrgastes ferner mit mindestens einem optischen Messleuchtelement (14) zur Aussendung von elektromagnetischer Messstrahlung versehen ist,
- wobei das Messleuchtelement (14) ebenfalls in der Vergussmasse des Gehäuses (12) eingebettet und innerhalb des Gehäuses (12) mit dessen Anschlusselementen (22) verbunden ist,
- **dass** durch die Ansteuer- und Auswerteeinheit (26) das optische Messleuchtelement (14) innerhalb von Einschaltintervallen zum Aussenden der Messstrahlung aktivierbar ist, wobei anhand der Intensität der Messstrahlung, die von dem optischen Messleuchtelement (14) ausgesendet und von dem optischen, fotosensitiven Sensorelement (18) empfangen wird, die Annäherung eines Objekts wie beispielsweise der Hand (30,30F,30B) eines Fahrgastes erkennbar ist, und
- **dass** durch die Ansteuer- und Auswerteeinheit (26) innerhalb von Ausschaltintervallen des optischen Messleuchtelements (14) anhand von dem optischen, fotosensitiven Sensorelement (18) empfangener Sonnenstrahlung zusammen mit der von dem Temperatursensor (20) gemessenen Temperatur die Temperatur im Bereich um das Gehäuse (12) herum ermittelbar ist.

2. Sensoreinheit nach Anspruch 1, **dadurch gekennzeichnet, dass** in der Vergussmasse des Gehäuses (12) ferner ein mit den Anschlusselementen (22) verbundenes optisches Referenzleuchtelement (16) eingebettet ist, das von dem optischen, fotosensitiven Sensorelement (18) empfangbare elektromagnetische Referenzstrahlung aussendet und das von der Ansteuer- und Auswerteeinheit (26) innerhalb der Einschaltintervalle des optischen Messleuchtelements (14) zum Aussenden der elektromagnetischen Referenzstrahlung aktivierbar ist, wobei anhand des Unterschiedes der Intensitäten der durch das optische, fotosensitive Sensorelement (18) empfangenen Referenzstrahlung des optischen Referenzleuchtelements (16) und der von einem sich annähernden Objekt wie beispielsweise einer Hand (30,30F,30B) eines Fahrgastes reflektierenden Messstrahlung des optischen Messleuchtelements (14) die Änderung eines Objekts und/oder der Abstand eines Objekts zum Gehäuse (12) ermittelbar ist.

3. Sensoreinheit nach Anspruch 1, **gekennzeichnet durch** einen außerhalb des Gehäuses (12) angeordneten Kompensationstemperatursensor (48) zur Kompensation von thermischen Einflüssen **durch** Übertragung von Wärme aus nicht der Sonnenstrahlung ausgesetzten Bereichen um das Gehäuse (12).

4. Sensoreinheit nach einem der Ansprüche 1 bis 3, **dadurch gekennzeichnet, dass** die Sensoreinheit zwei Sensoren (10) aufweist, die voneinander beabstandet sind und zur Unterscheidung der Richtungen, aus denen sich Objekte nähern, beispielsweise zur Unterscheidung der Annäherung einer Hand (30F) von der Fahrerseite aus gegenüber der Annäherung einer Hand (30B) von der Beifahrerseite aus, vorgesehen sind.

5. Sensoreinheit nach einem der Ansprüche 1 bis 4, **dadurch gekennzeichnet, dass** die beiden Sensoren (10) durch die Ausrichtung ihrer optischen, fotosensitiven Sensorelemente (18) definierte optische Achsen (52) aufweisen, dass die optischen Achsen (52) der beiden Sensoren (10) einen spitzen Winkel bilden und dass in der Ansteuer- und Auswerteeinheit (26) anhand der Intensitäten der von den optischen, fotosensitiven Sensorelementen (18) der beiden Sensoren (10) empfangenen Sonnenstrahlung der Einfallwinkel der Sonnenstrahlung ermittelbar ist.

6. Sensoreinheit nach Anspruch 4 oder 5, **dadurch gekennzeichnet, dass** nur einer der beiden Sensoren (10) einen in die Vergussmasse des Gehäuses (12) eingebetteten Temperatursensor (20) und gegebenenfalls einen außerhalb des Gehäuses angeordneten Kompensationstemperatursensor (48) aufweist.

## Claims

1. Sensor unit for installation in vehicles, in particular in or at the dashboard or a control unit of a vehicle, such as an air condition system, for instance, comprising:
- at least one sensor (10) for detecting the temperature in an area of the vehicle interior (36), said sensor (10) being provided with
- a housing (12) comprising a plastic casting compound, from which a plurality of electrically conductive connector elements (22) protrude,
- an optical photo-sensitive sensor element (18), and
- a temperature sensor (20) for detecting the temperature in the proximity of the housing (12),
- the optical photo-sensitive sensor element (18) and the temperature sensor (20) are embedded in the casting compound of the housing (12) and are connected to the connector elements (22) within the housing (12), and
- a control and evaluation unit (26) adapted to be connected to the connector elements (22) of the housing (12),
**characterized in**
- **that**, for the detection of the approach of an object, such as a hand (30, 30F, 30B) of a passenger, the sensor (10) is further provided with at least one optical measuring light element (14) emitting electromagnetic measuring radiation,
- wherein the measuring light element (14) is also embedded in the casting compound of the housing (12) and is connected to the connector elements (22) within the housing (12),
- **that** the optical measuring light element (14) is adapted to be activated by the control and evaluation unit (26) within the switch-on interval to emit said measuring radiation, the approach of an object, such as a hand (30, 30F, 30B) of a passenger being detectable from the intensity of the measuring radiation emitted by the optical measuring light element (14) and received by the optical photo-sensitive sensor element (18), and
- **that** the control and evaluation unit (26) is able to determine - within switch-off intervals of the optical measuring light elements (14) - the temperature in the area around the housing (12) from the solar radiation received by the optical photo-sensitive sensor element (18) in combination with the temperature measured by the temperature sensor (20).

2. Sensor unit according to claim 1, **characterized in that** further an optical reference light element (16) connected to the connector elements (22) is embedded in the casting compound of the housing (12), which reference light element (16) emits electromagnetic reference radiation receivable by the optical photo-sensitive sensor element (18) and is activatable by the control and evaluation unit (26) within the switch-on intervals of the optical measuring light element (14) to emit said electromagnetic reference radiation, wherein a change of an object and/or the distance of an object to the housing (12) can be determined from the difference between the intensities of the reference radiation received by the optical photo-sensitive sensor element (14) from the optical reference light element (16) and the measuring radiation of the optical measuring light element (14) reflected by an approaching object, such as a hand (30, 30F, 30B) of a passenger.

3. Sensor unit according to claim 1, **characterized by** a compensation temperature sensor (48) arranged outside the housing (12) for compensating for thermal influences by the transfer of heat from areas around the housing that are not exposed to solar radiation.

4. Sensor unit according to one of claims 1 to 3, **characterized in that** the sensor unit comprises two sensors (10) spaced from each other and provided for differentiating between directions from which objects approach, for instance, for differentiating between a hand (30F) approaching from the driver side and a hand (30B) approaching from the passenger side.

5. Sensor unit according to one of claims 1 to 4, **characterized in that** the two sensors (10) have optical axes (52) defined by the orientation of their optical photo-sensitive sensor elements (18), that the optical axes (52) of both sensors (10) form an acute angle, and that the incidence angle of the solar radiation can be determined in the control and evaluation unit (26) from the intensities of the solar radiation received by the optical photo-sensitive sensor elements (18) of the two sensors (10).

6. Sensor unit of claim 4 or 5, **characterized in that** only one of the two sensors (10) comprises a temperature sensor (20) embedded in the casting compound of the housing (12) and, optionally, a compensation temperature sensor (48) arranged outside said housing.

## Revendications

1. Unité de capteur pour l'intégration dans un véhicule, en particulier dans ou sur un tableau de bord ou une unité de commande d'un véhicule comme, pour exemple, un système de climatisation, comprenant
- au moins un capteur (10) pour détecter la température dans une région de l'intérieur du véhicule (36), ledit capteur (10) étant muni
- d'un boitier (12) comprenant une masse de scellement plastique, duquel boitier s'étendent plusieurs éléments connecteurs (22) aptes à conduire électricité,
- un élément capteur (18) optique photo-sensitif, et
- un capteur de température (20) pour déterminer la température dans le voisinage du boitier (12),
- ledit élément capteur (18) optique photo-sensitif et ledit capteur de température (20) sont encastrés dans la masse de scellement du boitier (12) et sont connectés aux éléments connecteurs (22) au sein dudit boitier (12), et
- une unité de commande et évaluation (26) propre à être connectée aux éléments connecteurs (22) du boitier (12),
**caractérisé en ce**
- **que**, pour la détection de l'approchement d'un objet, pour exemple la main (30, 30F, 30B) d'un passager, ledit capteur (10) est en outre muni d'un élément de lumière de mesure (14) optique pour émettre du rayonnement électromagnétique,
- ledit élément de lumière de mesure (14) aussi étant encastré dans ladite masse de scellement du boitier (12) et étant connecté aux éléments connecteurs (22) au sein du boitier (12),
- **que** ladite unité de commande et évaluation (26) est propre à activer ledit élément de lumière de mesure (14) pendant des intervalles de marche pour émettre ledit rayonnement de mesure, l'approchement d'un objet, comme pour exemple la main (30, 30F, 30B) d'un passager, étant déterminable par l'intensité du rayonnement de mesure émis par ledit élément de lumière de mesure (14) optique et reçu par ledit élément capteur (18) optique photo-sensitif, et
- **que** l'unité de commande et évaluation (26) est propre à déterminer, pendant des intervalles d'arrêt dudit élément de lumière de mesure (14), la température au voisinage dudit boitier (12) à partir du rayonnement solaire reçu par ledit élément capteur (18) optique photo-sensitif conjointement avec la température mesurée par ledit capteur de température (20).

2. Unité de capteur selon la revendication 1, **caractérisée en ce qu'**en outre un élément de lumière de référence (16) optique, connecté aux éléments connecteurs (22), est encastré dans la masse scellement du boitier (12), ledit élément de lumière de référence (16) émettant de rayonnement de référence électromagnétique propre à être reçu par ledit élément capteur (18) optique photo-sensitif et étant activable par ladite unité de commande et évaluation (26) pendant les intervalles de marche dudit élément de lumière de mesure (14) pour émettre ledit rayonnement de référence électromagnétique, le déplacement d'un objet et/ou la distance d'un objet du boitier (12) étant déterminable de la différence entre les intensités du rayonnement venant dudit élément de lumière de référence (16) optique reçu par ledit élément capteur (18) optique photo-sensitif et du rayonnement de mesure émis par ledit élément de lumière de mesure (14) optique reflêté par un objet s'approchant, pour exemple la main (30, 30B, 30F) d'un passager.

3. Unité de capteur selon la revendication 1, **caractérisée par** un capteur de température de compensation (48) situé hors du boitier (12) pour compenser les influences thermiques par transfert de chaleur de régions autour du boitier (12) qui ne sont pas exposées au rayonnement solaire.

4. Unité de capteur selon l'une quelconque des revendications 1 à 3, **caractérisée en ce que** ladite unité de capteur comprend deux capteurs (10) écartés l'un de l'autre et prévus pour différentier entre des directions d'approchement des objets, pour exemple pour différentier entre l'approchement d'une main (30F) du côté conducteur et l'approchement d'une main (30B) du côté passager.

5. Unité de capteur selon l'une quelconque des revendications là 4, **caractérisée en ce que** les deux capteurs (10) comprennent des axes optiques (52) définit par l'orientation de leurs éléments optiques photo-sensitifs (18), que les axes optiques (52) des deux capteurs (10) forment un angle aigu, et que l'angle d'incidence du rayonnement solaire peut être déterminé dans ladite unité de commande et évaluation (26) par les intensités du rayonnement solaire reçu par les éléments capteurs (18) optiques photo-sensitifs des deux capteurs (10).

6. Unité den capteur selon la revendication 4 ou 5, **caractérisée en ce que** seulement un des deux capteurs (10) comprend un capteur de température (20) encastré dans ladite masse de scellement du boitier (12) et, le cas échéant, un capteur de température de compensation (48) situé hors du boitier.
